# DEMANDE DE BREVET EUROPEEN

(11) **EP 4 009 630 A1**
(43) Date de publication de la demande: **08.06.2022**
(21) Numéro de dépôt: 21212551.2
(22) Date de dépôt: 06.12.2021
(51) Int. Cl.: H04N 7/18, G08B 13/196

(54) **PROCEDE DE DETECTION D'INTRUSION**

(30) Priorité: 07.12.2020 FR 2012749
(71) Demandeur: Delta Dore, 35270 Bonnemain (FR)
(72) Inventeur: ROUXEL, Yann, 35270 BONNEMAIN (FR); HERFRAY, Sophie, 35270 BONNEMAIN (FR)
(74) Mandataire: Cabinet Le Guen Maillet

(57) **Abrégé**

Procédé de détection d'intrusion implémenté par un dispositif de vérification connecté à au moins deux caméras, et comportant les étapes de : recevoir une information représentative d'une première détection de mouvement en provenance d'une première caméra ; enregistrer une information représentative d'un instant de la première détection de mouvement en association avec un identifiant de la première caméra ; recevoir une information représentative d'une deuxième détection de mouvement en provenance d'une deuxième caméra ; enregistrer une information représentative d'un instant de la deuxième détection de mouvement en association avec un identifiant de la deuxième caméra ; détecter une intrusion si un intervalle de temps entre l'instant de la première détection de mouvement et l'instant de la deuxième détection de mouvement est inférieur à une durée prédéfinie.

## Description

### DOMAINE TECHNIQUE

La présente invention concerne le domaine de la surveillance et concerne plus particulièrement un procédé de détection d'intrusion visant à éviter les fausses détections par caméra de surveillance.

### ETAT DE LA TECHNIQUE ANTERIEURE

L'utilisation de caméras permet d'effectuer la surveillance d'un site comme par exemple une maison ou une propriété. Par analyse d'images, une caméra peut détecter une modification de l'environnement. Par exemple la caméra identifie un changement entre deux images acquises dans un intervalle de temps prédéfini, comme par exemple une modification de l'intensité lumineuse d'un ou plusieurs pixels et détecte ainsi un mouvement. Une détection de mouvement effectuée par une caméra est alors interprétée comme une intrusion, ce qui génère une alarme. Toutefois, il arrive que des mouvements de l'environnement, comme par exemple des arbres bougeant par l'action du vent, génèrent des détections d'intrusion alors qu'aucun intrus n'est présent.

Il est alors souhaitable de pallier ces inconvénients de l'état de la technique.

Il est notamment souhaitable de fournir une solution qui permette d'éviter des fausses détections d'intrusion. Il est en outre souhaitable de fournir une solution qui permette d'utiliser des caméras existantes sans modifier les procédés de détection de mouvements qu'elles utilisent.

### EXPOSE DE L'INVENTION

Un objet de la présente invention est de proposer un procédé de détection d'intrusion implémenté par un dispositif de vérification, connecté à au moins deux caméras, et comportant les étapes de : recevoir une information représentative d'une première détection de mouvement en provenance d'une première caméra ; enregistrer une information représentative d'un instant de la première détection de mouvement en association avec un identifiant de la première caméra ayant effectué ladite première détection de mouvement ; recevoir une information représentative d'une deuxième détection de mouvement en provenance d'une deuxième caméra ; enregistrer une information représentative d'un instant de la deuxième détection de mouvement en association avec un identifiant de la deuxième caméra ayant effectué ladite deuxième détection de mouvement. Le procédé comporte en outre une étape de détecter une intrusion si un intervalle de temps entre l'instant de la première détection de mouvement et l'instant de la deuxième détection de mouvement est inférieur à une durée prédéfinie.

Ainsi, il est possible de détecter une intrusion en utilisant des procédés de détection de mouvement implémentés par des caméras existantes tout en évitant de fausses détections.

Selon un mode de réalisation particulier, le dispositif de vérification implémentant le procédé de détection d'intrusion est situé à distance des première et deuxième caméras, et l'étape de détection d'une intrusion comporte de vérifier que la première caméra et la deuxième caméra sont disposées sur un même site de surveillance.

Ainsi, il est possible d'effectuer une détection d'intrusion à distance. De plus, il est possible d'effectuer de manière centralisée une détection d'intrusion de différents sites de surveillance.

Selon un mode de réalisation particulier, le procédé comporte en outre une étape d'envoyer un message d'alarme à une centrale d'alarme lorsqu'une intrusion est détectée.

Ainsi, il est possible d'éviter une fausse détection d'intrusion et de générer une alarme lorsqu'une intrusion est détectée.

L'invention concerne également un dispositif de vérification, connecté à deux caméras et comportant : des moyens pour recevoir une information représentative d'une première détection de mouvement en provenance d'une première caméra ; des moyens pour enregistrer une information représentative d'un instant de la première détection de mouvement en association avec un identifiant de la première caméra ayant effectué ladite première détection de mouvement ; des moyens pour recevoir une information représentative d'une deuxième détection de mouvement en provenance d'une deuxième caméra ; des moyens pour enregistrer une information représentative d'un instant de la deuxième détection de mouvement en association avec un identifiant de la deuxième caméra ayant effectué ladite deuxième détection de mouvement ; et des moyens pour détecter une intrusion si un intervalle de temps entre l'instant de la première détection de mouvement et l'instant de la deuxième détection de mouvement est inférieur à une durée prédéfinie.

L'invention concerne également un système de détection d'intrusion comportant au moins deux caméras disposées sur un même site de surveillance, une centrale d'alarme et le dispositif de vérification mentionné ci-dessus.

Selon un mode de réalisation particulier, chaque caméra du système de détection d'intrusion est orientée dans une direction différente d'une autre caméra de sorte que le champ de vision d'une caméra est disjoint du champ de vision d'une autre caméra.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de détection d'intrusion comportant des caméras, un dispositif de vérification et une centrale d'alarme ;
[Fig. 2] illustre schématiquement une architecture matérielle du dispositif de vérification implémentant un procédé de détection d'intrusion ;
[Fig. 3] illustre schématiquement le procédé de détection d'intrusion implémenté par le dispositif de vérification ; et
[Fig. 4] illustre schématiquement un exemple d'architecture matérielle du dispositif de vérification.

### EXPOSE DETAILLE DE MODES DE REALISATION

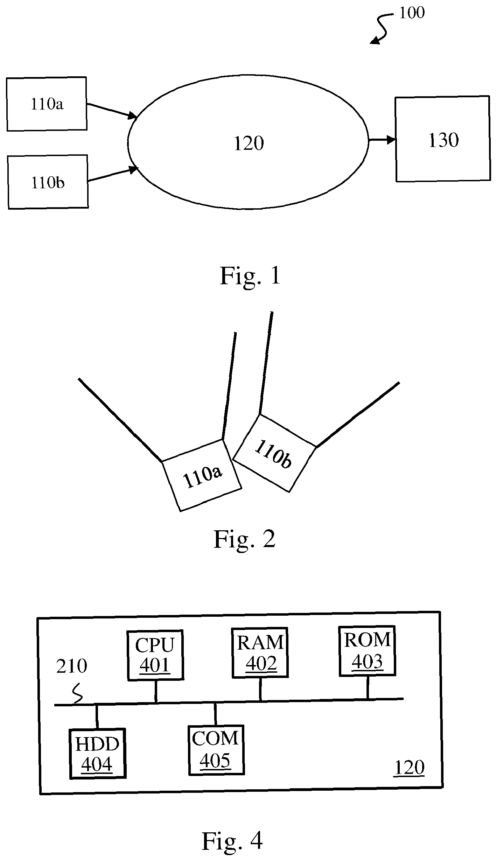

La **Fig. 1** illustre schématiquement un système de détection d'intrusion 100. Le système de détection d'intrusion comporte au moins deux caméras 110a et 110b, disposées sur un même site de surveillance, un dispositif de vérification 120 et une centrale d'alarme 130.

Chaque caméra 110a, 110b acquière en permanence des images de l'environnement et détecte des mouvements par analyse d'images. Pour détecter un mouvement, la caméra 110a, 110b peut par exemple identifier si un changement est observé entre deux images acquises dans un premier intervalle de temps prédéfini, pour une ou plusieurs zones de l'image. Chaque image acquise par la caméra 110a, 110b étant subdivisée en zones telles que des pixels ou des ensembles de pixels. Un changement d'une zone entre deux images peut être par exemple une modification de l'intensité lumineuse ou un changement de couleur de ladite zone. En outre, la caméra 110a, 110b peut compter un nombre de zones pour lesquelles un changement est identifié dans un second intervalle de temps prédéfini. La caméra 110a, 110b détecte un mouvement si ledit nombre de zones est supérieur à une quantité prédéfinie. Lorsqu'une caméra 110a, 110b détecte un mouvement, la caméra 110a, 110b en question transmet un message représentatif d'une détection de mouvement au dispositif de vérification 120.

Des caméras 110a, 110b du système de détection d'intrusion 100 peuvent être disposées sur des sites de surveillance différents. Des caméras 110a, 110b du système de détection d'intrusion 100 peuvent ainsi appartenir à des sites de surveillance différents. Dans ce mode de réalisation, le site de surveillance auquel appartient chaque caméra 110a, 110b est connu du dispositif de vérification 120.

A chaque détection de mouvement effectuée par une caméra 110a, 110b, le dispositif de vérification 120 reçoit un message représentatif d'une détection de mouvement en provenance de ladite caméra 110a, 110b. Le dispositif de vérification 120 détermine qu'il y a une intrusion sur un site de surveillance lorsqu'au moins deux caméras 110a, 110b distinctes et disposées sur ledit site de surveillance transmettent un message représentatif d'une détection de mouvement dans un intervalle de temps inférieur à une durée prédéfinie. Lorsque c'est le cas, le dispositif de vérification 120 transmet un message d'alarme à la centrale d'alarme 130.

Selon un mode de réalisation particulier, le dispositif de vérification 120 comporte une plateforme vidéo qui réceptionne des informations représentatives de détection de mouvement transmises par les caméras 110a, 110b et les centralise. Le dispositif de vérification 120 comporte en outre un moteur de règle qui reçoit des informations représentatives de détection de mouvement de la plateforme vidéo, détermine s'il y a intrusion et identifie le site de surveillance concerné. Le dispositif de vérification 120 comporte en outre une application centralisée de domotique pour chaque site de surveillance. Lorsqu'une détection d'intrusion sur un site de surveillance a été déterminée par le moteur de règle, l'application centralisée de domotique du site de surveillance en question reçoit une information représentative d'une détection d'intrusion et transmet alors un message d'alarme à la centrale d'alarme 130. La plateforme vidéo et le moteur de règle peuvent être implémentés par des solutions logicielles hébergées sur des serveurs accessibles par internet. Ainsi, il est possible d'effectuer des détections d'intrusion sur différents sites de surveillance à l'aide d'un même ensemble de solutions logicielles, commun aux différents sites de surveillance, et situé à distance desdits sites de surveillance.

La **Fig. 2** illustre schématiquement un exemple d'orientation de deux caméras 110a, 110b disposées sur un même site de surveillance.

Chaque caméra 110a est orientée dans une direction différente d'une autre caméra 110b du même site de surveillance de sorte que le champ de vision d'une caméra 110a est différent et disjoint d'une caméra 110b distincte. Ainsi, un même élément fixe de l'environnement, mais pouvant générer une détection de mouvement comme par exemple un arbre ou une plante, ne peut pas être imagé par deux caméras 110a, 110b distinctes, ce qui permet d'éviter une fausse détection.

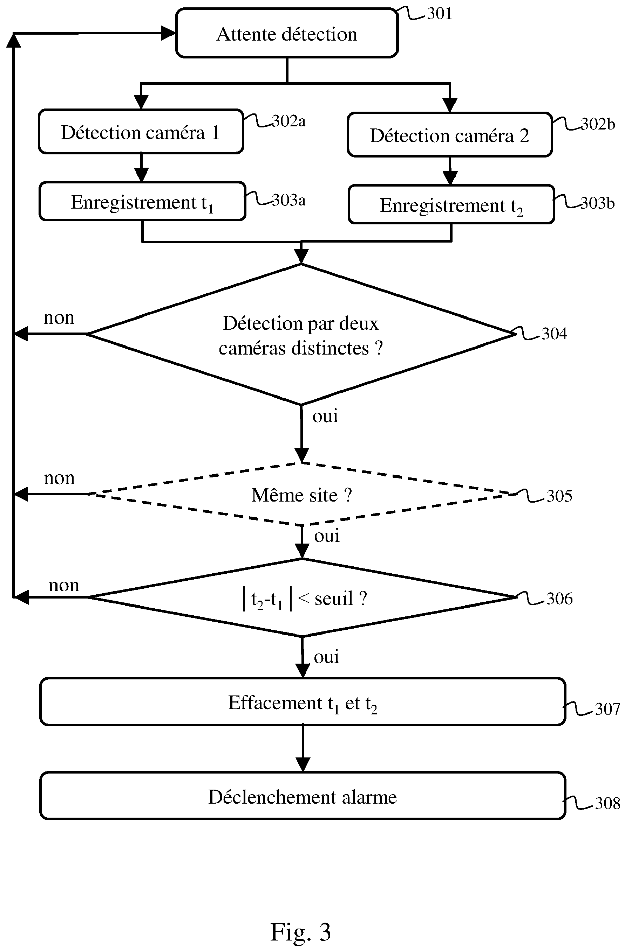

Alternativement, lorsqu'une partie du champ de vision d'une caméra 110a recouvre partiellement ou totalement le champ de vision d'une autre caméra 110b, par exemple en raison de contraintes d'installation, une zone d'exclusion peut être configurée sur ladite caméra 110a. La zone d'exclusion est une zone de l'image acquise par ladite caméra 110a correspondant à la partie du champ de vision de la caméra 110a recouvrant le champ de vision de l'autre caméra 110b. La zone d'exclusion est alors considérée comme invisible par la caméra 110a. La caméra 110a ne peut donc pas détecter de mouvement dans ladite zone d'exclusion et ne peut prendre en compte aucun changement dans la zone d'exclusion pour effectuer une détection de mouvement. Ainsi, le champ de vision de la caméra 110a analysé lors d'une détection de mouvement ne recouvre pas le champ de vision d'une autre caméra 110b distincte. La **Fig. 3** illustre schématiquement un procédé de détection d'intrusion implémenté par le dispositif de vérification 120.

Dans une étape 301, le dispositif de vérification 120 est en attente d'une détection de mouvement.

Dans une étape 302a, le dispositif de vérification 120 reçoit, en provenance d'une première caméra 110a, une information représentative d'une première détection de mouvement et identifie ladite première caméra 110a ayant effectué ladite première détection de mouvement.

Dans une étape 303a suivante, le dispositif de vérification 120 enregistre dans une table, en association avec un identifiant de la première caméra 110a, une information représentative de l'instant t₁ de la première détection de mouvement. L'instant d'une détection de mouvement correspond par exemple à un instant auquel la détection de mouvement a été effectuée ou à un instant auquel le dispositif de vérification 120 a reçu l'information représentative de la détection de mouvement. Le dispositif de vérification 120 effectue ensuite une étape 304.

Dans une étape 302b, le dispositif de vérification 120 reçoit, en provenance d'une deuxième caméra 110b, une information représentative d'une deuxième détection de mouvement et identifie ladite première caméra 110a ayant effectué ladite deuxième détection de mouvement.

Dans une étape 303b, le dispositif de vérification 120 enregistre dans une table, en association avec un identifiant de la deuxième caméra 110b, une information représentative de l'instant t₂ de la deuxième détection de mouvement. Le dispositif de vérification 120 effectue ensuite l'étape 304.

A l'étape 303a (respectivement 303b), selon un premier mode de réalisation, dans le cas où une information représentative d'un instant de détection de mouvement précédent est déjà enregistrée à la suite d'une détection de mouvement antérieure effectuée par la première caméra 110a (respectivement la deuxième caméra 110b), le dispositif de vérification 120 remplace ladite information représentative d'un instant de détection de mouvement précédent par une information représentative de l'instant t₁ de la première détection de mouvement (respectivement de l'instant t₂ de la deuxième détection de mouvement) la plus récente. L'information représentative d'un instant de détection de mouvement précédent est alors effacée par le dispositif de vérification 120.

Selon un deuxième mode de réalisation, le dispositif de vérification 120 remplace une information représentative d'un instant de détection de mouvement précédent par une information représentative d'un instant d'une nouvelle détection de mouvement (par exemple l'instant t₁ de la première détection de mouvement) seulement lorsqu'une durée prédéfinie est écoulée entre l'instant de détection de mouvement précédent et l'instant de la nouvelle détection de mouvement. Le dispositif de vérification 120 efface alors l'information représentative de l'instant de détection de mouvement précédent de sorte à ne conserver qu'une seule information représentative d'un instant d'une détection de mouvement effectuée par une caméra 110a, 110b. Dans le cas contraire, si une détection de mouvement est effectuée par une caméra 110a, 110b avant que la durée prédéfinie ne soit écoulée depuis un instant de détection de mouvement précédent effectuée par ladite caméra 110a, 110b alors le dispositif de vérification 120 n'enregistre rien.

Selon un troisième mode de réalisation, le dispositif de vérification 120 enregistre successivement dans la table, en association avec un identifiant de la première caméra 110a (respectivement de la deuxième caméra 110b), chaque information représentative d'un instant de détection de mouvement. A l'étape 304, le dispositif de vérification 120 vérifie dans la table si deux détections de mouvement effectuées par deux caméras 110a, 110b distinctes sont enregistrées. Dit autrement, le dispositif de vérification 120 vérifie si une première détection de mouvement effectuée par une première caméra 110a est enregistrée et si une deuxième détection de mouvement effectuée par une deuxième caméra 110b, distincte de la première caméra 110a, est enregistrée. Si c'est le cas, le dispositif de vérification 120 effectue une étape 305. Dans le cas contraire, le dispositif de vérification 120 effectue à nouveau l'étape 301.

A l'étape 305 optionnelle, le dispositif de vérification 120 vérifie en outre si la deuxième caméra 110b appartient au même site de surveillance que la première caméra 110a. Si c'est le cas, le dispositif de vérification 120 effectue une étape 306. Dans le cas contraire, le dispositif de vérification 120 effectue à nouveau l'étape 301.

A l'étape 306, le dispositif de vérification 120 calcule un intervalle de temps entre l'instant t₁ de la première détection de mouvement et l'instant t₂ de la deuxième détection de mouvement. Dans le cas où plusieurs deuxièmes détections de mouvement sont effectuées par différentes deuxièmes caméras 110b, distinctes de la première caméra 110a, le dispositif de vérification 120 choisit l'instant t₂ de la deuxième détection de mouvement la plus récente.

Selon les premier et deuxième modes de réalisation décrits ci-dessus, un seul instant ti (respectivement t₂) de détection de mouvement effectuée par une même caméra 110a (respectivement 110b) est enregistré à un moment donné et est donc pris en compte pour calculer ledit intervalle de temps.

Selon le troisième mode de réalisation décrit ci-dessus, si plusieurs instants t₁ (respectivement t₂) de détections de mouvement effectuées par une même caméra 110a (respectivement 110b) sont enregistrés successivement en association avec un identifiant de ladite caméra 110a (respectivement 110b), le dispositif de vérification choisit l'instant t₁ de la première détection de mouvement (respectivement t₂ de la deuxième détection de mouvement) le plus récent.

Le dispositif de vérification 120 compare ensuite une valeur absolue dudit intervalle de temps à une durée prédéfinie. Si la valeur absolue dudit intervalle de temps est inférieure à la durée prédéfinie, le dispositif de vérification 120 détermine qu'il y a intrusion sur le site de surveillance et effectue l'étape 307. Dans le cas contraire, le dispositif de vérification 120 effectue à nouveau l'étape 301.

A l'étape 307, le dispositif de vérification 120 efface les informations représentatives des instants t₁ et t₂ des première et deuxième détections de mouvement puis effectue une étape 308.

A l'étape 308, le dispositif de vérification 120 transmet un message d'alarme à la centrale d'alarme 130. Alternativement, le moteur de règle du dispositif de vérification 120 transmet une information représentative d'une détection d'intrusion à une application centralisée de domotique, qui transmet un message d'alarme à la centrale d'alarme 130.

La **Fig. 4** illustre schématiquement un exemple d'architecture matérielle du dispositif de vérification 120. Le dispositif de vérification 120 comporte alors, reliés par un bus de communication 210 ; un processeur ou CPU (« Central Processing Unit » en anglais) 401 ; une mémoire vive RAM 402 ; une mémoire morte ROM (« Read Only Memory » en anglais) 403 ; une unité de stockage 404, telle qu'un disque dur HDD (« Hard Disk Drive » en anglais), ou un lecteur de support de stockage, tel qu'un lecteur de cartes SD (« Secure Digital » en anglais) ; et une interface COM 405 permettant de communiquer avec les caméras 110a, 110b, et la centrale d'alarme 130.

Le processeur CPU 401 est capable d'exécuter des instructions chargées dans la RAM 402 à partir de la ROM 403, d'une mémoire externe (telle qu'une carte SD), d'un support de stockage, ou d'un réseau de communication. Lorsque le dispositif de vérification 120 est mis sous tension, le processeur CPU 401 est capable de lire de la RAM 402 des instructions et de les exécuter. Ces instructions forment un programme d'ordinateur causant l'implémentation, par le processeur CPU 401, de tout ou partie des étapes décrites ici en relation avec le dispositif de vérification 120.

Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif de vérification 120 comporte ainsi de la circuiterie électronique configurée pour implémenter tout ou partie des étapes décrites ici en relation avec le dispositif de vérification 120.

## Revendications

1. Procédé de détection d'intrusion implémenté par un dispositif de vérification (120), connecté à au moins deux caméras (110a, 110b), et **caractérisé en ce que** le procédé comporte les étapes de :
- recevoir (302a) une information représentative d'une première détection de mouvement en provenance d'une première caméra (110a),
- enregistrer (303a) une information représentative d'un instant de la première détection de mouvement,
- recevoir (302b) une information représentative d'une deuxième détection de mouvement en provenance d'une deuxième caméra (110b),
- enregistrer (303b) une information représentative d'un instant de la deuxième détection de mouvement,
- détecter une intrusion (306) si un intervalle de temps entre l'instant de la première détection de mouvement et l'instant de la deuxième détection de mouvement est inférieur à une durée prédéfinie et si la deuxième caméra est distincte de la première caméra.

2. Procédé selon la revendication 1, **caractérisé en ce que** le dispositif de vérification (120) est situé à distance des première et deuxième caméras, et **en ce que** l'étape de détecter une intrusion comporte de vérifier que la première caméra et la deuxième caméra appartiennent à un même site de surveillance.

3. Procédé selon l'une des revendications 1 ou 2, **caractérisé en ce qu'**il comporte en outre une étape d'envoyer (308) un message d'alarme à une centrale d'alarme (130) lorsqu'une intrusion est détectée.

4. Dispositif de vérification (120), connecté à deux caméras (110a, 110b) et **caractérisé en ce qu'**il comporte :
- des moyens pour recevoir (302a) une information représentative d'une première détection de mouvement en provenance d'une première caméra (110a),
- des moyens pour enregistrer (302b) une information représentative d'un instant de la première détection de mouvement,
- des moyens pour recevoir (303a) une information représentative d'une deuxième détection de mouvement en provenance d'une deuxième caméra (110b),
- des moyens pour enregistrer (303b) une information représentative d'un instant de la deuxième détection de mouvement,
- des moyens pour détecter une intrusion (306) si un intervalle de temps entre l'instant de la première détection de mouvement et l'instant de la deuxième détection de mouvement est inférieur à une durée prédéfinie et si la deuxième caméra est distincte de la première caméra.

5. Système de détection d'intrusion (100), **caractérisé en ce qu'**il comporte au moins deux caméras (110a, 110b) disposées sur un même site de surveillance, une centrale d'alarme (130) et un dispositif de vérification (120) selon la revendication 4.

6. Système de détection d'intrusion (100) selon la revendication précédente, **caractérisé en ce que** chaque caméra est orientée dans une direction différente d'une autre caméra de sorte que le champ de vision d'une caméra est disjoint du champ de vision d'une autre caméra.

7. Programme d'ordinateur pouvant être stocké sur un support et/ou téléchargé d'un réseau de communication, afin d'être lu par un processeur, et comprenant des instructions pour implémenter le procédé selon l'une des revendications 1 à 3, lorsque ledit programme est exécuté par le processeur.

8. Support de stockage d'informations stockant un programme d'ordinateur selon la revendication précédente.
